# EUROPÄISCHE PATENTSCHRIFT

(11) **EP 1 108 974 B1**
(45) Veröffentlichungstag und Bekanntmachung des Hinweises auf die Patenterteilung: **28.04.2004**
(21) Anmeldenummer: 00122085.4
(22) Anmeldetag: 11.10.2000
(51) Int. Cl.: G01B 5/00, G01B 5/008

(54) **Koordinatenmessvorrichtung**
Coordinate measuring machine
Appareil de mesure de coordonnées

(30) Priorität: 03.12.1999 DE 19958306
(43) Veröffentlichungstag der Anmeldung: 20.06.2001
(73) Patentinhaber: Carl Zeiss, 73447 Oberkochen (DE); Carl-Zeiss-Stiftung trading as Carl Zeiss, 73447 Oberkochen (DE)
(72) Erfinder: Jacobs, Klaus, 89551 Königsbronn-Ochsenberg (DE); Piwek, Volker, 28201 Bremen (DE); Walther, Jörg, 89547 Gerstetten (DE)
(74) Vertreter: Geyer, Werner, Dr.-Ing.

(56) Entgegenhaltungen:
- EP-A- 0 899 536
- DE-A- 4 345 094
- FR-A- 2 560 985
- US-A- 3 774 311
- US-A- 4 895 454

## Beschreibung

Die Erfindung bezieht sich auf eine Koordinatenmeßvorrichtung mit einem Grundgestell, einem an diesem abgestützten Meßtisch zum Haltern eines zu vermessenden Objektes, einer Abtasteinrichtung zum Abtasten der Oberfläche des zu vermessenden Objektes und mit einer am Grundgestell gelagerten, die Abtasteinrichtung tragenden Positioniereinrichtung zum Verfahren der Abtasteinrichtung in drei Raumachsen über dem Meßtisch.

Derartige Koordinatenmeßvorrichtungen werden dazu eingesetzt, um die Form eines zu vermessenden Objektes abzutasten und dieses genau zu vermessen. Neben der erstmaligen Bestimmung der geometrischen Daten eines solchen Objektes können Koordinatenmeßvorrichtungen auch dazu eingesetzt werden, um die Maßhaltigkeit von Objekten in einer Fertigungslinie zu überprüfen.

Koordinatenmeßvorrichtungen sind Hochpräzisionsgeräte, deren Meßgenauigkeit über derjenigen der für die Herstellung des vermessenen Objektes verwendeten Fertigungsmittel liegt. Im Gegensatz zu Fertigungseinrichtungen bleiben die bei einem Abtastvorgang auftretenden Kräfte allerdings gering.

Zum Abtasten größerer Objekte sind aus dem Stand der Technik Koordinatenmeßvorrichtungen in Portalbauweise bekannt, bei denen die Abtasteinrichtung an einer höhenverstellbaren Pinole angebracht ist, die an einer zwischen den beiden Portalsäulen angebrachten Traverse entlang derselben verschiebbar gelagert ist. Die Säulen mit der Traverse bilden dabei gemeinsam ein Portal, das einen Meßtisch überspannt und entlang desselben luftgelagert verfahrbar ist. Diese bekannte Konstruktion bietet wegen des Umgreifens des Meßtisches durch das Portal eine gute Struktursteifigkeit, ist aber relativ aufwendig und benötigt einen erheblichen Platzbedarf. Durch die Portalbauweise ist zudem die freie Zugänglichkeit des Meßtisches eingeschränkt, und bei schweren Werkstücken wird infolge der dabei erfolgenden Kräfteeinleitung die Ausrichtung der Präzisionsführungen beeinflußt, was zu Meßungenauigkeiten führt.

Im Hinblick auf die hohen Anforderungen an die Meßgenauigkeit wurden in der Koordinatenmeßtechnik bisher Hochpräzisionslagerungen, meist in Form von Luftlagerungen, eingesetzt, für die eine hohe Reinheit der Umgebungsatmospäre sowie ein möglichst konstantes Temperaturniveau erforderlich ist, so daß diese Koordinatenmeßvorrichtungen in speziellen Räumen betrieben werden müssen und kaum in der unmittelbaren Umgebung von Fertigungseinrichtungen aufgestellt werden können.

Aus der DE 43 45 094 A ist eine Koordinatenmeßvorrichtung in Auslegerbauart bekannt, bei der an einem Grundgestell ein in einer ersten Richtung, nämlich entlang dem Grundgestell, geführter Schlitten verfahrbar gelagert ist. Auf diesem ist ein zweiter Schlitten in einer senkrechten Richtung verfahrbar, auf dem seinerseits ein dritter Schlitten sitzt, der einen über den Meßtisch ragenden Bügelarm trägt, welcher im Bereich seines freien Endes eine Abtasteinrichtung haltert, wobei der dritte Schlitten in einer Richtung senkrecht zum Meßtisch hin (bzw. von diesem zurück) verfahren werden kann.

Der Erfindung liegt die Aufgabe zugrunde, eine Koordinatenmeßvorrichtung zu schaffen, die mit hoher Genauigkeit und großer Dynamik zu arbeiten imstande ist und einen Einsatz auch in einer unmittelbaren Fertigungsumgebung gestattet.

Diese Aufgabe wird durch eine Koordinatenmeßvorrichtung mit den im Anspruch 1 definierten Merkmalen gelöst, bei der die Positioniereinrichtung einen ersten, am Grundgestell in einer ersten Richtung geführten Schlitten aufweist, der auf einer Seite des Meßtisches zu diesem hin- bzw. von diesem wegfahrbar ist und auf dem ein zweiter Schlitten in einer zur ersten Richtung senkrechten, zweiten Richtung verfahrbar ist, der, in seiner Verfahrrichtung gesehen, an seinem vom Meßtisch abgewandten Endbereich mit einem seitlich des Meßtisches hochragenden Stützabschnitt versehen ist, an dem in einer Richtung senkrecht zu einer Hauptaufspannebene des Meßtisches ein über diesen vorragender Bügelarm angebracht ist, der an seinem freien Ende über dem Meßtisch die Abtasteinrichtung trägt und als ein in sich starres Element ausgebildet ist, wobei der erste Schlitten und der in Verfahrrichtung des ersten Schlittens vor dem Stützabschnitt liegende Vorderbereich des zweiten Schlittens beim Verfahren der Positioniereinrichtung bis zur Anlage des Stützabschnitts gegen den Seitenrand des Meßtisches unter den Meßtisch einfahrbar sind.

Durch die starre Ausbildung des Bügelarmes und das damit verbundene Fehlen jeglicher Führungen an diesem wird die Möglichkeit einer nahezu freien und beliebigen Ausgestaltung des Bügelarmes geschaffen, wodurch auch - anders als bei einem umlaufenden Portal, an dem verfahrbar die Abtasteinrichtung angebracht ist - keine störende ortsabhängige Verbiegung des Bügelsarmes (je nach dessen Stellung zum Meßtisch) vorliegt. In Zusammenwirken mit dem seitliche neben dem Meßtisch angeordneten Stützabschnitt wird bei der erfindungsgemäßen Koordinatenmeßvorrichtung eine vorzügliche Zugänglichkeit zur gesamten Oberfläche des Meßtisches, über welche die Abtasteinrichtung geführt werden kann, erreicht.

Da bei der erfindungsgemäßen Anordnung der eingesetzte Bügelarm eine gegenüber einem den Meßtisch umlaufenden Portal eine ganz erheblich geringere Masse aufweist, arbeitet die erfindungsgemäße Koordinatenmeßvorrichtung auch mit einer demgegenüber deutlich erhöhten Dynamik des Gesamtsystems sowohl in Haupt-, wie auch in Nebenprozessen. Zudem ist eine sehr variable Einbaulage des Sensors (vertikal, horizontal bzw. in sonstwie definierter Lage) möglich. Überdies können relativ große Lagerbasen für die bewegten Teile vorgesehen werden, was ebenfalls der Meßgenauigkeit und der Struktursteifikeit der erfindungsgemäßen Vorrichtung zugute kommt.

Eine ganz besonders kompakte Bauweise ergibt sich durch die Verfahrbarkeit eines Teils der Positioniereinrichtung unter den Meßtisch. Dies erlaubt die Ausbildung der Positioniereinrichtung mit einer breiten, stabilen Basis und damit eine hohe Steifigkeit derselben, was wiederum zu einer hohen Meßgenauigkeit führt. Im vollständig eingefahrenen Zustand kommt dabei der Stützabschnitt in Anlage gegen einen Seitenrand des Meßtisches. Da ein Großteil der Stützwirkung gegenüber dem Grundgestell durch unter den Meßtisch verfahrbare Elemente bewirkt wird, kann der Stützbereich auf der von dem Meßtisch abgewandten Seite des Stützabschnittes relativ schmal und somit insbesondere auch der neben dem Meßtisch liegende Bereich des Grundgestells in seinen Abmessungen kompakt gehalten werden, so daß die insgesamt für die Koordinatenmeßvorrichtung benötigte Aufstellfläche gering bleibt.

Wegen der relativ kleinen Masse der Positioniereinrichtung (verglichen mit einer Portalkonstruktion) sind auch die erforderlichen Beschleunigung- bzw. Verzögerungskräfte für die Zustellung der Abtasteinrichtung klein. Daraus resultiert eine hohe Positioniergeschwindigkeit und damit eine große Dynamik der erfindungsgemäßen Koordinatenmeßvorrichtung.

Desweiteren erlaubt die weitestgehend freie Gestaltbarkeit des Bügelarmes dessen Optimierung im Hinblick auf die Geometrie und die Werkstoffauswahl unter Berücksichtigung der bei einem Abtastvorgang auftretenden Kräfte und Momente.

Eine besonders kompakte Bauweise für die Positioniereinrichtung ergibt sich vorzugsweise dann, wenn der Bügelarm an der von dem Meßtisch abgewandten Seite des Stützabschnittes des zweiten Schlittens geführt ist. Zudem können hierdurch auch die Führungsschienen für das Verfahren der beiden Schlitten relativ kurz zum Meßtisch gehalten werden, da der für die Führungen des Bügelarms benötigte Bauraum nicht als Totweg an diesen Führungsschienen in Erscheinung tritt.

In einer vorteilhaften Ausgestaltung der Koordinatenmeßvorrichtung liegt die Lagerung des Bügelarms an dem Stützabschnitt etwa auf der Höhe der an dem freien Ende des Bügelarmes vorgesehenen Abtasteinrichtung. Hierdurch lassen sich während eines Abtastvorganges auftretende Kippmomente an den Führungen des Bügelarms gering halten, wodurch die Meßgenauigkeit verbessert wird.

Vorzugsweise bildet der zweite Schlitten ein im wesentlichen L-förmiges Profil aus, das durch den Stützabschnitt, der sich im wesentlichen senkrecht zu einer Hauptaufspannebene des Meßtisches erstreckt und mit Führungseinrichtungen zur verschiebbaren Lagerung des Bügelarms versehen ist, sowie durch den mit dem Stützabschnitt verbundenen Vorderabschnitt des zweiten Schlittens, der sich im wesentlichen parallel zu dieser Hauptaufspannebene des Meßtisches erstreckt und unter den Meßtisch verfahrbar ist, gebildet wird. Hierdurch wird einerseits eine besonders enge Heranführung des zweiten Schlittens an den Meßtisch ermöglicht, so daß der Bügelarm kurz gehalten werden kann, und andererseits wird eine stabile Abstützung in unmittelbarer Nähe des zu vermessenden Werkstückes erreicht.

Bevorzugt sind die verschiebbaren Teile auf wälzgelagerten Profilschienenführungen mittels Kugelumlaufschuhen gelagert.

Zur Verbesserung der Führungsgenauigkeit umfassen die Führungseinrichtungen für die beiden Schlitten und/oder den Bügelarm vorzugsweise jeweils zwei voneinander beabstandete, parallele Führungsschienen. Diese Art der Führung ist bei guter Laufgenauigkeit robuster als die bisher verwendeten Hochpräzisionsluftlagerungen. Bevorzugt ist dabei den Führungsschienen jeweils eine Antriebseinrichtung zugeordnet, die mittig zwischen ihnen liegt, wodurch sich eine gleichmäßige Krafteinleitung bei der Zustellung der Abtasteinrichtung ergibt, so daß antriebsbedingte Störgrößen für das Meßergebnis weitestgehend ausgeschaltet werden können.

In einer weiteren vorteilhaften-Ausgestaltung der Erfindung ist am ersten Schlitten an dessen in seiner Verschieberichtung vom liegendem Ende eine Kopplungseinrichtung zum zeitweiligen Ankopplung eines dem Meßtisch zuzuführenden Objektes oder einer Transporteinrichtung für ein solches vorgesehen, das bzw. die mit dem Schlitten z. B. an oder auf den Meßtisch gezogen werden kann. Dies ist besonders dann vorteilhaft, wenn die Koordinatenmeßvorrichtung im Zusammenwirken mit einer automatischen oder halbautomatischen Beschickungseinrichtung betrieben wird, da dann der Schlitten die Zuführfunktion für das Heranziehen der Transporteinrichtung bzw. des Meßobjektes an den Meßtisch gleich mitübemehmen kann, so daß auf eine eigene Zuführeinrichtung mit getrenntem Antrieb und verketteter Steuerung verzichtet werden kann.

In einer weiteren, vorteilhaften Ausgestaltung der erfindungsgemäßen Koordinatenmeßvorrichtung umgreift der auf der dem Meßtisch abgewandten Seite des Stützabschnitts gelagerte Bügelarm den Stützabschnitt derart, daß er ihn entweder oben oder seitlich in Richtung zum Meßtisch hin umfaßt bzw. umläuft.

In einer weiteren vorteilhaften Ausgestaltung der Erfindung ist der Bügelarm gegenüber dem zweiten Schlitten auch noch verdrehbar gelagert, insbesondere um eine zur ersten Richtung (Y) parallele Drehachse, so daß insbesondere gekrümmte Linien oder Oberflächen besonders leicht abgetastet werden können.

Um auch stark zerklüftete Oberflächenkonturen besser abzutasten, umfaßt der Bügelarm vorzugsweise einen sich im wesentlichen parallel zu der Hauptaufspannebene des Meßtisches erstreckenden Kragarm und einen daran anschließenden, sich im wesentlichen senkrecht zu der Hauptaufspannebene erstreckenden und an seinem Ende die Abtasteinrichtung tragenden Arm bzw. Bügel.

In einer weiteren vorteilhaften Ausgestaltung der Erfindung ist die Abtasteinrichtung als austauschbares Modul ausgebildet, das als Anbaueinheit an eine zur Ankopplung unterschiedlicher Abtasteinrichtungen ausgebildeten Schnittstelle des Bügelarmes an- und von dieser abkoppelbar ist. Damit kann die Koordinatenmeßvorrichtung schnell und einfach an unterschiedliche Meßaufgaben angepaßt werden. Die unterschiedlichen Abtasteinrichtungen können beispielsweise in einem Magazin im Verfahrbereich des freien Endes des Bügelarms, beispielsweise an einem Rand des Meßtisches in dort vorgesehenen, geeigneten Aufnahmen, untergebracht werden, so daß ein Austausch von Abtasteinrichtungen in der Koordinatenmeßvorrichtung sogar automatisch ausgeführt werden kann.

Vorzugsweise sind zur Übertragung von in der Abtasteinrichtung erzeugten Signalen vorgesehene Leitungen innerhalb des Bügelarms angeordnet und somit zuverlässig gegen Beschädigungen sowie vor elektromagnetischen Einflüssen geschützt.

Die Erfindung wird nachfolgend anhand der Zeichnung im Prinzip beispieishalber noch näher erläutert. Es zeigen:
- Figur 1: eine perspektivische Schrägansicht eines Ausführungsbeispiels einer Koordinatenmeßvorrichtung im betriebsbereiten Zustand mit einem Bügelarm in mittlerer Höhenstellung;
- Figur 2: eine Vorderansicht des Ausführungsbeispiels in der in Figur 1 dargestellten Stellung;
- Figur 3: eine perspektivische Schrägansicht des Ausführungsbeispiels von Figur 1 mit dem Bügelarm in einer unteren Stellung;
- Figur 4: eine Seitenansicht des Ausführungsbeispiels in der in Figur 3 dargestellten Stellung;
- Figur 5: eine Vorderansicht des Ausführungsbeispiels in der in Figur 3 dargestellten Stellung; und
- Figur 6: einen Vertikalschnitt durch den Bügelarm und eine zugehörige Positioniereinrichtung in der Stellung nach Figur 1 (Schnitt A-A an Fig. 2).

In den Figuren ist eine Koordinatenmeßvorrichtung zum Abtasten von Koordinaten eines in der Zeichnung nicht näher dargestellten, zu vermessenden Objektes gezeigt, die in einer fertigungsnahen Umgebung aufgestellt werden kann.

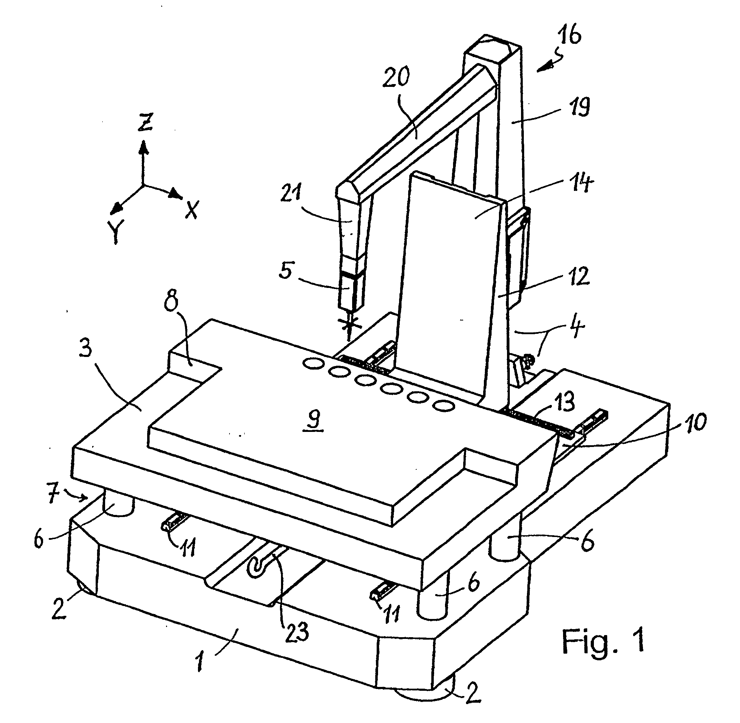

Wie aus Figur 1 zu erkennen ist, umfaßt die Koordinatenmeßvorrichtung zunächst ein Grundgestell 1, das in dem gezeigten Ausführungsbeispiel als massive, auf Stützen 2 gelagerte Grundplatte ausgebildet ist. Dieses Grundgestell 1 trägt einen stationären Meßtisch 3 zum Haltern eines zu vermessenden Objektes, der einen Teilbereich des Grundgestells 1 überdeckt, sowie eine in drei Raumachsen X, Y, Z bewegbare Positioniereinrichtung 4, an der die eigentliche Abtasteinrichtung 5 gegenüber dem Grundgestell 1 geführt ist.

Der Meßtisch 3 weist bei einer Betrachtung von oben, d. h. in den Figuren 1 bis 6, in der XY-Ebene eine im wesentlichen rechteckige Form auf. Die Abstützung des Meßtisches 3 am Grundgestell 1 erfolgt über vier an den Ecken des Meßtisches 3 angeordnete Säulen 6, wobei zwischen Meßtisch 3 und Grundgestell 1 ein von außen zugänglicher Zwischenraum 7 ausgebildet wird. Die Säulen 6 sind dabei so angeordnet, daß die Kraftableitung vom Meßtisch 3 auf das Grundgestell 1 außerhalb des Bereiches, in dem Führungseinrichtungen für die Positioniereinrichtung 4 vorliegen, erfolgt.

Weiterhin umfaßt der Meßtisch 3 einen hervorgehobenen Bereich 8, der eine Hauptaufspannebene 9 für ein zu vermessendes Objekt ausbildet. Hierdurch kann visuell gut überprüft werden, ob ein Meßobjekt für einen Abtastvorgang im Aktionsbereich der Abtasteinrichtung 5 korrekt positioniert ist.

In einer alternativen Ausführungsvariante, die in der Zeichnung nicht dargestellt ist, sind an dem Meßtisch 3 mehrere solche Aufnahmebereiche zum Haltern von zu vermessenden Objekten vorgesehen. In einer besonderen Ausführungsvariante ist der Meßtisch 3 als ein (in den Figuren ebenfalls nicht dargestellter) Drehtisch mit zwei oder auch mehr Aufnahmebereichen ausgebildet, mit dem durch Verdrehen ein rascher Wechsel mehrerer abzutastender Objekte in den bzw. aus dem Aktionsbereich der Abtasteinrichtung 5 erfolgen kann.

Zum Abtasten eines auf dem Meßtisch 3 angeordneten Meßobjektes wird die Positioniereinrichtung 4 mit der Abtasteinrichtung 5 gegenüber dem Grundgestell 1 verfahren. Die Positioniereinrichtung 4 weist einen neben dem Meßtisch 3 nach oben ragenden Stützabschnitt 14 auf, der gegenüber dem Grundgestell 1 in zwei Raumachsen X und Y parallel zu der Hauptaufspannebene 9 bewegbar ist. Hierzu umfaßt die Positioniereinrichtung 4 zunächst einen am Grundgestell 1 geführten ersten Schlitten 10, der in den Figuren 1 bis 6 in Y-Richtung bewegbar ist. Entsprechende Führungseinrichtungen erstrecken sich hierzu von außerhalb in den zwischen Meßtisch 3 und Grundgestell 1 gebildeten Raum 7 hinein bzw. auch durch diesen hindurch. In dem dargestellten Ausführungsbeispiel sind die Führungseinrichtungen als am Grundgestell 1 befestigte, parallel verlaufende Profil-Führungsschienen 11 ausgebildet, in denen mittels Kugelumlaufschuhen der erste Schlitten 10 verschiebbar gelagert ist.

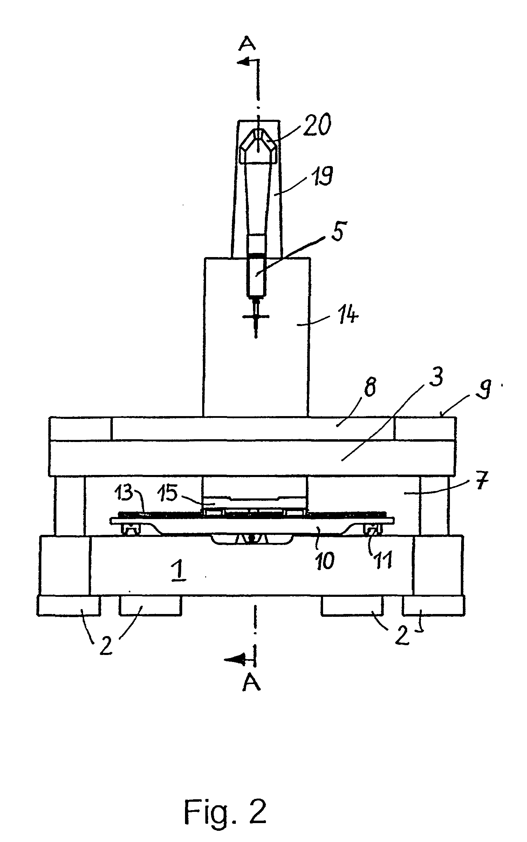

Auf dem ersten Schlitten 10 ist ein zweiter, in einer zur Y-Richtung senkrechten Querrichtung X verschiebbarer zweiter Schlitten 12 als weiteres Element der Positioniereinrichtung 4 angeordnet. Dieser zweite Schlitten 12 ist gegenüber dem ersten Schlitten 10 an entsprechenden Führungseinrichtungen 13 (vgl. Fig. 2) in X-Richtung geführt, die wie die zuvor genannten Führungseinrichtungen ebenfalls durch zwei parallel verlaufende Profil-Führungsschienen mit Kugelumlaufschuhen gebildet werden.

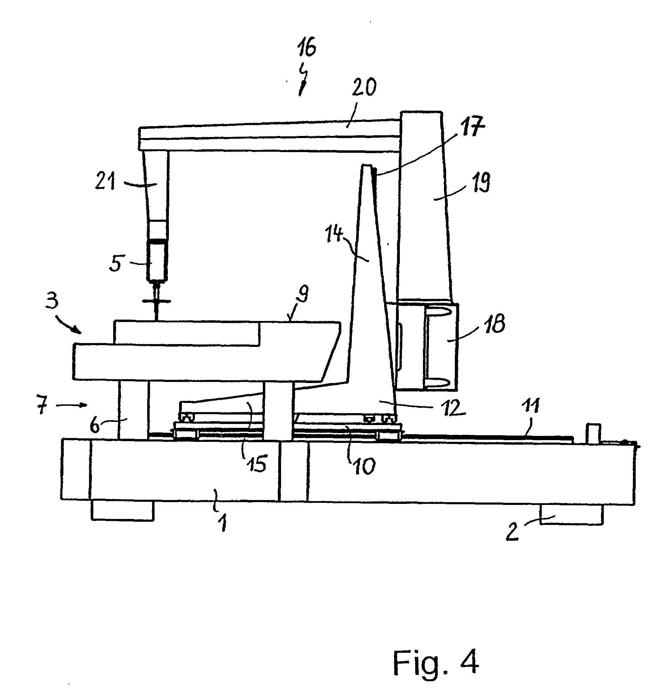

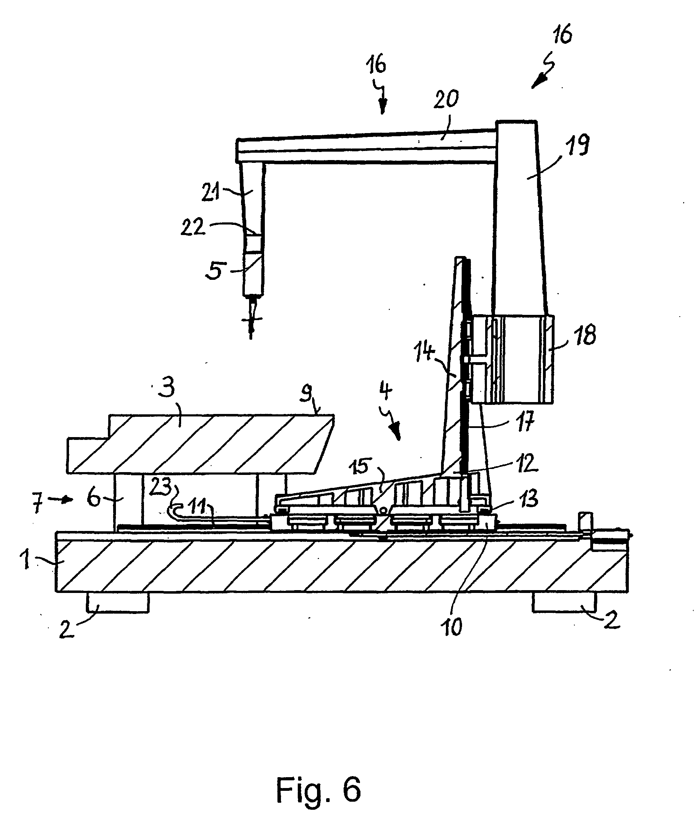

Der zweite Schlitten 12 umfaßt, wie aus den Figuren 4 und 6 zu erkennen ist, einen sich im wesentlichen senkrecht zu der Hauptaufspannebene 9 erstreckenden Stützabschnitt 14 zur Kopplung mit einem die eigentliche Abtasteinrichtung 5 tragenden Endglied der Positioniereinrichtung 4 sowie einen sich an den nach oben ragenden Stützabschnitt 14 anschließenden, in Bewegungsrichtung Y des ersten Schlittens gesehen vor dem Stützabschnitt 14 liegenden Vorderabschnitt 15, der sich im wesentlichen parallel zu der Hauptaufspannebene 9 des Meßtisches 3 erstreckt und am Grundgestell 1 verschieblich gelagert ist. Damit ergibt sich für den zweiten Schlitten 12 in der Seitenansicht (Fig. 4 und 6) ein im wesentlichen L-förmiges Gesamtprofil.

Wie aus Figur 6 weiter zu erkennen ist, dient der Vorderabschnitt 15 der Verbreiterung der Abstützungsbasis des zweiten Schlittens 12 am ersten Schlitten 10, so daß sich eine hohe Steifigkeit der Lagerung zwischen beiden und damit eine große Führungsgenauigkeit verwirklichen läßt. Überdies ist der erste Schlitten 10 zusammen mit dem Vorderabschnitt 15 des zweiten Schlittens 12 in den zwischen dem Grundgestell 1 und dem Meßtisch 3 gebildeten Zwischenraum 7 einfahrbar, so daß die Abstützung der Positioniereinrichtung 4 in deren ganz an den Meßtisch 3 herangefahrener Stellung zumindest im wesentlichen zwischen den Meßtisch 3 und das Rahmengestell 1 verlagert werden kann, womit sich die Aufstellfläche der Koordinatenmeßvorrichtung gering halten läßt. Die Abstützung der Basis der Positioniereinrichtung 4 unterhalb eines zu vermessenden Objektes begünstigt zudem ebenfalls die Meßgenauigkeit.

Zur Verringerung der Trägheitsmasse ist der zweite Schlitten 12 im Hinblick auf die angreifenden Kräfte und Momente optimiert. So nimmt die Dicke des Stützabschnittes 14 mit zunehmender Höhe ab. Entsprechend ist auch der Vorderabschnitt 15 des zweiten Schlitten 12 in Richtung auf die von dem Stützabschnitt 14 ferner liegende, sich in X-Richtung erstreckende Führungsschiene 13 mit einem sich verjüngenden, hier in seiner Dicke abnehmenden Querschnitt ausgebildet.

An dem die Hauptaufspannebene 9 des Meßtisches 3 überragenden Stützabschnitt 14 des zweiten Schlittens 12 ist ein senkrecht zu der XY-Ebene, d. h. in Z-Richtung, bewegbarer, die Abtasteinrichtung 5 tragender Bügelarm 16 angekoppelt. Dazu ist, wie Fig. 6 zeigt, der Stützabschnitt 14 an seiner von dem Meßtisch 3 abgewandten Seite mit Führungseinrichtungen versehen, die hier wiederum als zwei parallele, voneinander beabstandete, in Z-Richtung verlaufende Profil-Führungsschienen 17 ausgebildet sind, auf denen Kugelumlaufschuhe laufen. Durch diese Anordnung wird ein Totweg an den Führungen in Y-Richtung vermieden. Aufgrund einer glattwandigen Ausbildung der zu dem Meßtisch 3 weisenden Seite des Stützabschnittes 14 kann der zweite Schlitten 12 eng an den zugewandten Seitenrand des Meßtisches 3 herangefahren werden, so daß die Erstreckung des Bügelarmes 16 in Y-Richtung kurz ausgebildet werden kann. Der Bügelarm 16 ist dabei als in sich steife Einheit ausgebildet und in seiner Formgebung weitestgehend frei gestaltbar. Aufgrund der starren Ausbildung des Bügelarms 16, d.h. dem Fehlen jeglicher Führungen an diesen, bleiben die von der Abtasteinrichtung 5 generierten Meßsignale in bezug auf ein abgetastetes Meßobjekt nahezu ortsunabhängig. Wie in Figur 6 zu erkennen ist, erstreckt sich der Bügelarm 16 über den Vorderabschnitt 15 des zweiten Schlittens 12, wobei das freie Ende 22 des Bügelarmes 16 mit der Abtasteinrichtung 5 vor dem vom Stützabschnitt 14 abgewandten Ende des Vorderabschnittes 15 liegen kann.

Das Ausführungsbeispiel zeigt lediglich eine mögliche Form für den Bügelarm 16. Der in den Figuren dargestellte Bügelarm 16 umfaßt zunächst einen kastenartigen Sockelabschnitt 18 (Fig. 6), der mit den Profil-Führungsschienen 17 zusammenwirkende, in X-Richtung voneinander beabstandete Führungselemente aufweist. Diese Führungselemente bzw. die Führung des gelagerten Endes des Bügelarms 16 an dem Stützabschnitt 15 des zweiten Schlittens 12 liegt dabei in etwa auf der Höhe der an dem freien Ende 22 des Bügelarmes 16 vorgesehenen Abtasteinrichtung 5. An den Sockelabschnitt 18 schließt ein sich in Z-Richtung, d. h. in den Figuren: ein sich nach oben, erstreckender Tragarm 19 an, dessen Außenquerschnitt nach oben hin abnimmt. Von dem oberen Ende des Tragarms 19 verläuft oberhalb des Stützabschnitts 14 ein Kragarm 20 im wesentlichen parallel zur Hauptaufspannebene 9 des Meßtisches 3 in Richtung zu letzterem hin. An den Kragarm 20 schließt wiederum ein im wesentlichen in Z-Richtung verlaufender Arm 21 an, der an seinem freien Ende 22 die eigentliche Abtasteinrichtung 5 trägt. Genauso wie an dem Tragarm 19 nimmt auch am Kragarm 20 und am Arm 21 der Außenquerschnitt in Richtung zur Abtasteinrichtung 5 hin widerstandsmomentoptimiert ab. Dabei kann der gesamte Bügelarm 16 als Leichtbaukonstruktion ausgebildet werden, so daß dieser wie auch der erste Schlitten 10 und der zweite Schlitten 12 mit besonders geringen Beschleunigungskräften verfahrbar ist, was eine hohe Dynamik der Abtastung bei genauen Meßergebnissen begünstigt.

Für den Bügelarm 16 ergibt sich in der Seitenansicht (vgl. Fig. 4 und 6) eine nach unten offene, U-artige Form, mit der auch zerklüftete Oberflächenkonturen gut abgetastet werden können. Da zudem der zweite Schlitten 12 nur auf einer Seite des Meßtisches 3 angeordnet ist, bleibt letzterer aus drei Raumrichtungen zugänglich.

Die Abtasteinrichtung 5 selbst ist in herkömmlicher Weise ausgebildet, so daß für den Fachmann hier nähere Erläuterungen nicht erforderlich sind. Allerdings kann das freie Ende 22 des Bügelarms 16 als Schnittstelle ausgebildet werden, an die unterschiedliche Abtasteinrichtungen, die an bestimmte Abtastaufgaben besonders angepaßt sind, angekoppelt werden können. Zweckmäßigerweise werden die unterschiedlichen Abtasteinrichtungen in einem (nicht gezeigten) Magazin im Aktionsbereich des Bügelarmes 16 aufbewahrt, so daß auf sie bei Bedarf gegebenenfalls auch automatisch zurückgegriffen werden kann. Dieses Magazin kann beispielsweise in oder an dem Meßtisch 3 vorgesehen werden.

Die Übertragung von in der Abtasteinrichtung 5 erzeugten Signalen erfolgt über Leitungen, die zur Vermeidung von Beschädigungen innerhalb des Bügelarmes 16 verlaufen, wobei die Auswertung der Signale in an sich bekannter Art und Weise in einer Auswertungsvorrichtung erfolgt.

Zum Verfahren der Abtasteinrichtung 5 entlang der zu vermessenden Oberfläche eines Meßobjektes werden die Elemente der Positioniereinrichtung 4, d. h. der erste Schlitten 10, der zweite Schlitten 12 sowie der Bügelarm 16, relativ zueinander sowie zu dem Meßtisch 3 verfahren, wozu jeweils im Bereich der zugehörigen Führungseinrichtungen geeignete, nicht näher darstellte Antriebseinrichtungen vorgesehen sind. Diese sind jeweils derart angeordnet, daß ein mittiger Kraftangriff im Bereich zwischen den jeweiligen Profil-Führungsschienen in Richtung der jeweiligen Raumachse erfolgt, so daß das Meßergebnis beeinträchtigende Kräfte bzw. Momente minimiert werden.

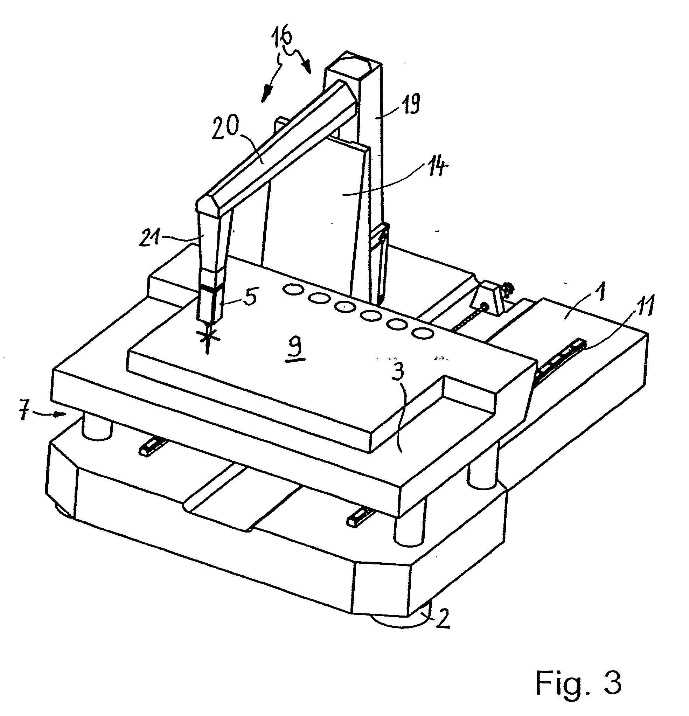

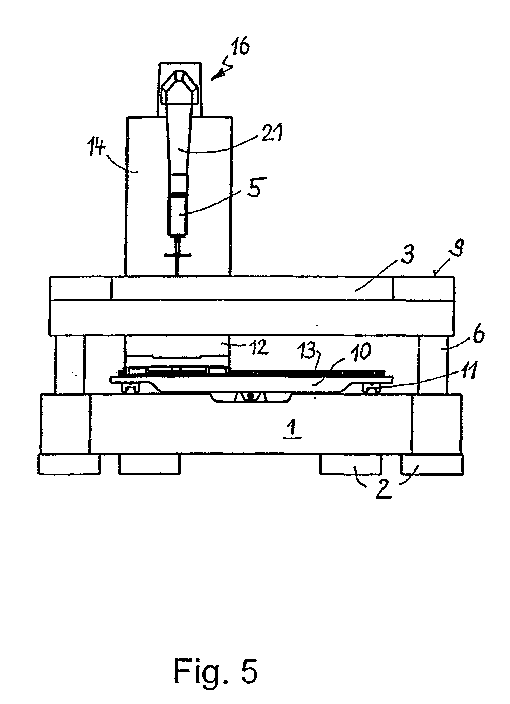

In den Figuren sind beispielhaft einige mögliche Betriebsstellungen der Koordinatenmeßvorrichtung und insbesondere der Abtasteinrichtung 5 in bezug auf den Meßtisch 3 dargestellt. Figur 1 zeigt dabei eine Stellung, in der alle Elemente der Positioniereinrichtung 4 eine mittlere Position in bezug auf jeweiligen ihre Verschiebungsmöglichkeiten einnehmen, während in Fig. 3 eine Stellung gezeigt ist, in der die Positioniereinrichtung ganz an den Meßtisch 3 herangefahren ist, wobei der zweite Schlitten 12 in X-Richtung eine seitliche Endposition einnimmt und der Bügelarm 16 sich in seiner ganz unteren Position befindet, in welcher der Kragarm 20 wenig oberhalb der Oberkante des Stützabschnittes 14 verbleibt. Die Fig. 2 zeigt eine Vorderansicht der Vorrichtung aus Fig. 1, Fig. 4 eine Seitenansicht und Fig. 5 eine Vorderansicht der Vorrichtung aus Fig. 3.

Die oben beschriebene Koordinatenmeßvorrichtung eignet sich besonders für den Einsatz in einer unmittelbaren Fertigungsumgebung, beispielsweise im Umfeld einer kontinuierlichen Produktionslinie, aus der einzelne oder auch alle Produkte herausgegriffen und in ihren Abmessungen fortlaufend kontrolliert werden. Dabei kann die Koordinatenmeßvorrichtung aufgrund ihres sehr dynamischen Verhaltens auch vollständig in die Produktionslinie integriert werden, ohne eine effiziente Fertigung beeinträchtigen.

In einer Ausführungsvariante, die nur in Fig. 1 und Fig. 6 (entsprechend einem Schritt A-A in Fig. 2) dargestellt ist, ist an dem ersten Schlitten 10 eine Kopplungseinrichtung 23 zum zeitweiligen Anschluß desselben an eine zum Halten eines Meßobjektes ausgebildete Transporteinrichtung vorgesehen. Damit können (nicht gezeigte) Transporteinrichtungen bzw. Meßobjekte unter Ausnutzung der Antriebseinrichtung des ersten Schlittens 10 an den Meßtisch 3 herangezogen und dabei z. B. auf den Meßtisch 3 überführt und dort mittels der Abtasteinrichtung 5, die durch die Positioniereinrichtung 4 verfahren wird, vermessen werden.

Der Bügelarm 16 kann auch noch gegenüber dem zweiten Schlitten 12 um eine zur Y-Achse parallele Achse verdrehbar angebracht sein, um eine rasche Abtastung gekrümmter Oberfläche zu ermöglichen. Eine geeignete Verdrehlagerung könnte z. B. in den Sockelabschnitt 18 des Stützabschnitts 14 integriert sein.

## Patentansprüche

1. Koordinatenmeßvorrichtung mit einem Grundgestell (1), einem an diesem abgestützten Meßtisch (3) zum Haltern eines zu vermessenden Objektes, einer Abtasteinrichtung (5) zum Abtasten der Oberfläche des zu vermessenden Objektes, und mit einer am Grundgestell (1) gelagerten, die Abtasteinrichtung (5) tragenden Positioniereinrichtung (4) zum Verfahren der Abtasteinrichtung (5) in drei Raumachsen (X, Y, Z) oberhalb des Meßtisches (3), wobei die Positioniereinrichtung (4) einen ersten, am Grundgestell (1) in einer ersten Richtung (Y) geführten Schlitten (10) aufweist, der auf einer Seite des Meßtisches (3) zu diesem hin- bzw. von diesem wegfahrbar ist und auf dem ein zweiter Schlitten (12) in einer zur ersten Richtung (Y) senkrechten zweiten Richtung (X) verfahrbar ist, der an seinem vom Meßtisch (3) abgewandten Endbereich mit einem seitlich des Meßtisches (3) aufragenden Stützabschnitt (14) versehen ist, an dem in einer Richtung senkrecht zu einer Hauptaufspannebene (9) des Meßtisches (3) ein über den Meßtisch (3) ragender Bügeiarm (16) verfahrbar angebracht ist, der an seinem freien Ende (22) über dem Meßtisch (3) die Abtasteinrichtung (5) trägt und als ein in sich starres Element ausgeführt ist, und wobei der erste Schlitten (10) sowie der in Verfahrrichtung (Y) des ersten Schlittens (10) vor dem Stützabschnitt (14) liegende Vorderbereich (15) des zweiten Schlittens (12) beim Verfahren der Positioniereinrichtung (4) bis zur Anlage des Stützabschnitts (14) gegen den Seitenrand des Meßtisches (3) unter den Meßtisch (3) einfahrbar sind.

2. Koordinatenmeßvorrichtung nach Anspruch 1, bei welcher der Bügelarm (16) am Stützabschnitt (15) des zweiten Schlittens (12) an dessen vom Meßtisch (3) abgewandter Seite verschiebbar gelagert ist.

3. Koordinatenmeßvorrichtung nach Anspruch 1 oder 2, bei der die Lagerung des Bügelarms (16) am Stützabschnitt (15) etwa in Höhe der an dem freien Ende (22) des Bügelarmes vorgesehenen Abtasteinrichtung (5) liegt.

4. Koordinatenmeßvorrichtung nach einem der Ansprüche 1 bis 3, bei welcher der zweite Schlitten (12) ein im wesentlichen L-förmiges Profil ausbildet, das durch den Stützabschnitt (14), der sich im wesentlichen senkrecht zu einer Hauptaufspannebene (9) des Meßtisches (3) erstreckt und mit Führungseinrichtungen (17) zur bewegbaren Lagerung des gebundenen Endes des Bügelarms (16) versehen ist, sowie durch den mit dem Stützabschnitt (14) verbundenen Vorderabschnitt (15) des zweiten Schlittens (12), der sich im wesentlichen parallel zu der Hauptaufspannebene (9) erstreckt und abschnittsweise in den zwischen dem Meßtisch (3) und dem Grundgestell (1) begrenzten Raum verfahrbar ist, gebildet wird.

5. Koordinatenmeßvorrichtung nach einem der Ansprüche 1 bis 4, bei welcher der erste Schlitten (10) am Grundgestell (1) und/oder der zweite Schlitten (12) am ersten Schlitten (10) und/oder der Bügelarm (16) am Stützabschnitt (14) des zweiten Schlittens (12) jeweils auf wälzgelagerten Profilschienenführungen (11; 13; 17) mittels Kugelumlaufschuhen verschieblich gelagert ist.

6. Koordinatenmeßvorrichtung nach einem der Ansprüche 1 bis 5, bei der jeder der beiden Schlitten (10; 12) und der Bügelarm (16) jeweils über zwei voneinander beabstandete Führungseinrichtungen (11; 13; 17) beweglich geführt sind.

7. Koordinatenmeßvorrichtung nach Anspruch 6, bei der den Führungseinrichtungen jeweils eine Antriebseinrichtung zugeordnet ist; die mittig zwischen den Profilschienen (11, 13, 17) an den entlang der jeweiligen Raumachse (X, Y, Z) relativ zueinander zu verschiebenden Teilen (1, 10, 12, 16) angreift.

8. Koordinatenmeßvorrichtung nach einem der Ansprüche 5 bis 7, bei der am ersten Schlitten (10) an dessen in seiner Verschieberichtung (Y) vorne liegendem Ende eine von diesem vorstehende Kopplungseinrichtung (23) zur zeitweisen Ankopplung eines dem Meßtisch (3) zuzuführenden Objektes oder einer Transporteinrichtung für dieses angebracht ist.

9. Koordinatenmeßvorrichtung nach Anspruch 2 und einem der Ansprüche 3 bis 8, bei welcher der Bügelarm (16) den Stützabschnitt (14) oben in Richtung zum Meßtisch (3) hin überragt.

10. Koordinatenmeßvorrichtung nach Anspruch 2 und einem der Ansprüche 3 bis 8, bei welcher der Bügelarm (16) den Stützabschnitt (14) seitlich in Richtung zum Meßtisch (3) hin überragt.

11. Koordinatenmeßvorrichtung nach einem der Ansprüche 1 bis 8, bei welcher der Meßtisch (3) als Drehtisch ausgebildet ist.

12. Koordinatenmeßvorrichtung nach einem der Ansprüche 4 bis 11, bei welcher der Bügelarm (16) gegenüber dem zweiten Schlitten (12) auch verdrehbar gelagert ist.

13. Koordinatenmeßvorrichlung nach einem der Ansprüche 1 bis 12, bei welcher der Bügelarm (16) einen sich im wesentlichen parallel zu der Hauptaufspannebene (9) des Meßtisches (3) erstreckenden Kragarm (20) und einen sich daran anschließenden, sich im wesentlichen senkrecht zu diesem erstreckenden und an seinem Ende (22) die Abtasteinrichtung (5) tragenden Arm (21) umfaßt.

14. Koordinatenmeßvorrichtung nach einem der Ansprüche 1 bis 13, bei der die Abtasteinrichtung (5) als austauschbares Modul ausgebildet ist, das als Anbaueinheit an eine zur Ankopplung unterschiedlicher Abtasteinrichtungen ausgebildete Schnittstelle des Bügelarmes (16) an- und abkoppelbar ist.

## Claims

1. Coordinate measuring machine with a base frame (1), a measuring table (3), which is supported on the latter, for holding an object which is to be measured, a sensing device (5) for sensing the surface of the object which is to be measured, and with a positioning device (4), which is mounted on the base frame (1) and bears the sensing device (5), for moving the sensing device (5) along three spatial axes (X, Y, Z) above the measuring table (3), wherein the positioning device (4) comprises a first carriage (10), which is guided on the base frame (1) in a first direction (Y), can move on one side of the measuring table (3) towards or away from the latter and on which a second slide (12) can move in a second direction (X) which is perpendicular to the first direction (Y), the latter slide being provided at its end region which is remote from the measuring table (3) with a support portion (14) which rises at the side of the measuring table (3) and to which a bow arm (16), which projects over the measuring table (3), is fitted so that it can move in a direction perpendicular to a main clamping plane (9) of the measuring table (3), which arm bears the sensing device (5) at its free end (22) above the measuring table (3) and is constructed as an inherently rigid element, and wherein the first carriage (10) and the front region (15) of the second carriage (12), which lies in front of the support portion (14) in the direction of movement (Y) of the first carriage (10), can move in under the measuring table (3) when the positioning device (4) moves until the support portion (14) comes to lie against the side edge of the measuring table (3).

2. Coordinate measuring machine according to Claim 1, in which the bow arm (16) is mounted in a displaceable manner on the support portion (15) of the second carriage (12) on the side thereof which is remote from the measuring table (3).

3. Coordinate measuring machine according to Claim 1 or 2, in which the mounting of the bow arm (16) on the support portion (15) lies approximately on a level with the sensing device (5) provided at the free end (22) of the bow arm.

4. Coordinate measuring machine according to any one of Claims 1 to 3, in which the second carriage (12) forms a substantially L-shaped section which is constituted by the support portion (14), which extends substantially perpendicularly to a main clamping plane (9) of the measuring table (3) and is provided with guide devices (17) for mounting the attached end of the bow arm (16) in a mobile manner, and by the front portion (15), connected to the support portion (14), of the second carriage (12), which extends substantially parallel to the main clamping plane (9) and can move in stages into the space defined between the measuring table (3) and the base frame (1).

5. Coordinate measuring machine according to any one of Claims 1 to 4, in which recirculating ball shoes are used to mount the first carriage (10) on the base frame (1) and/or the second carriage (12) on the first carriage (10) and/or the bow arm (16) on the support portion (14) of the second carriage (12) in a displaceable manner in each case on antifriction-mounted sectional rail guides (11; 13; 17).

6. Coordinate measuring machine according to any one of Claims 1 to 5, in which each of the two carriages (10; 12) and the bow arm (16) are in each case guided in a mobile manner by two spaced guide devices (11; 13; 17).

7. Coordinate measuring machine according to Claim 6, in which a respective drive device is associated with the guide devices, this drive device acting centrally between the sectional rails (11, 13, 17) on the parts (1, 10, 12, 16) which are to be displaced relative to one another along the respective spatial axis (X, Y, Z).

8. Coordinate measuring machine according to any one of Claims 5 to 7, in which a coupling device (23) is fitted to the first carriage (10) at the end of the latter which lies in front in the direction of displacement (Y) such that it protrudes from this in order to temporarily couple an object which is to be fed to the measuring table (3) or a transport device for this object.

9. Coordinate measuring machine according to Claim 2 and any one of Claims 3 to 8, in which the bow arm (16) projects upwards over the support portion (14) in the direction of the measuring table (3).

10. Coordinate measuring machine according to Claim 2 and any one of Claims 3 to 8, in which the bow arm (16) projects laterally over the support portion (14) in the direction of the measuring table (3).

11. Coordinate measuring machine according to any one of Claims 1 to 8, in which the measuring table (3) is formed as a turntable.

12. Coordinate measuring machine according to any one of Claims 4 to 11, in which the bow arm (16) is also mounted so as to be rotatable with respect to the second carriage (12).

13. Coordinate measuring machine according to any one of Claims 1 to 12, in which the bow arm (16) comprises a cantilever (20), which extends substantially parallel to the main clamping plane (9) of the measuring table (3), and an arm (21), which adjoins the cantilever, extends substantially perpendicularly to this and bears the sensing device (5) at its end (22).

14. Coordinate measuring machine according to any one of Claims 1 to 13, in which the sensing device (5) is formed as a replaceable module which can be coupled and uncoupled as an add-on unit to and from an interface, formed to couple different sensing devices, of the bow arm (16).

## Revendications

1. Dispositif de mesure de coordonnées comportant un bâti de base (1), une table de mesure (3) s'appuyant sur celui-ci pour maintenir un objet à mesurer, un dispositif de palpage (5) pour palper la surface de l'objet à mesurer, et comportant un dispositif de positionnement (4) monté sur le bâti de base (1) et portant le dispositif de palpage (5), pour le déplacement du dispositif de palpage (5) dans trois axes spatiaux (X, Y, Z) au-dessus de la table de mesure (3), le dispositif de positionnement (4) comportant un premier chariot (10) guidé sur le bâti de base (1) dans une première direction (Y), lequel est déplaçable sur un côté de la table de mesure (3), par rapport à celle-ci, de manière à s'en rapprocher ou à s'en éloigner, et sur lequel est déplaçable un deuxième chariot (10) dans une deuxième direction (X) perpendiculaire à la première direction (Y), lequel chariot est pourvu dans sa zone terminale tournée à l'opposé de la table de mesure (3), d'une section d'appui (14) dépassant latéralement de la table de mesure (3), sur laquelle est fixé déplaçable dans une direction perpendiculaire à un plan de bridage principal (9) de la table de mesure (3), un bras d'étrier (16), dépassant de la table de mesure (3), qui porte, à son extrémité libre (22), au-dessus de la table de mesure (3), le dispositif de palpage (5) et qui est réalisé comme un élément rigide, et le premier chariot (10) ainsi que la zone avant (15) du deuxième chariot (12), située devant la section d'appui (14) dans la direction de déplacement (Y) du premier chariot (10), peuvent être rentrés sous la table de mesure (3), pendant le déplacement du dispositif de positionnement (4) jusqu'à ce que la section d'appui (4) vienne s'appliquer contre le bord latéral de la table de mesure (3).

2. Dispositif de mesure de coordonnées selon la revendication 1, dans lequel le bras d'étrier (16) est monté coulissant sur la section d'appui (15) du deuxième chariot (12) sur son côté tourné à l'opposé de la table de mesures (3).

3. Dispositif de mesure de coordonnées selon la revendication 1 ou 2, dans lequel le support du bras d'étrier (16) sur la section d'appui (15) se situe approximativement à hauteur du dispositif de palpage (5) prévu à l'extrémité libre (22) du bras d'étrier.

4. Dispositif de mesure de coordonnées selon l'une des revendications 1 à 3, dans lequel le deuxième chariot (12) forme un profilé sensiblement en L qui est formé par la section d'appui (14), qui s'étend sensiblement perpendiculairement à un plan de bridage principal (9) de la table de mesure (3), et est pourvu de dispositifs de guidage (17) pour le support déplaçable de l'extrémité attachée du bras d'étrier (16), ainsi que par la section avant (15) du deuxième chariot (12), reliée à la section d'appui (14), laquelle s'étend sensiblement parallèlement au plan de bridage principal (9) et est déplaçable par endroits dans l'espace délimité par la table de mesure (3) et le bâti de base (1).

5. Dispositif de mesure de coordonnées selon l'une des revendications 1 à 4, dans lequel le premier chariot (10) est monté sur le bâti de base (1) et/ou le deuxième chariot (12) sur le premier chariot (10) et/ou le bras d'étrier (16) sur la section d'appui (14) du deuxième chariot (12), dans chaque cas, de manière à pouvoir coulisser, au moyen de patins à circulation de billes, sur des guides à rails profilés (11 ; 13 ; 17) montés sur roulements.

6. Dispositif de mesure de coordonnées selon l'une des revendications 1 à 5, dans lequel chacun des deux chariots (10 ; 12) et le bras d'étrier (16) sont guidés déplaçables respectivement par deux dispositifs de guidage (11 ; 13 ; 17) espacés l'un de l'autre.

7. Dispositif de mesure de coordonnées selon la revendication 6, dans lequel à chacun des dispositifs de guidage est associé un dispositif d'entraînement qui agit au milieu entre les rails profilés (11, 13, 17), sur les parties (1, 10, 12, 16) à faire coulisser les unes par rapport aux autres le long de l'axe spatial (X, Y, Z) respectif.

8. Dispositif de mesure de coordonnées selon l'une des revendications 5 à 7, dans lequel un dispositif d'accouplement (23) est placé sur le premier chariot (10), à son extrémité située à l'avant dans sa direction de déplacement (Y), et faisant saillie de celle-ci, pour l'accouplement provisoire d'un objet à amener à la table de mesure (3) ou d'un dispositif de transport.

9. Dispositif de mesure de coordonnées selon la revendication 2, et l'une des revendications 3 à 8, dans lequel le bras d'étrier (16) dépasse de la section d'appui (14) à sa partie supérieure, en direction de la table de mesure (3).

10. Dispositif de mesure de coordonnées selon la revendication 2, et l'une des revendications 3 à 8, dans lequel le bras d'étrier (16) dépasse latéralement de la section d'appui (14), en direction de la table de mesure (3).

11. Dispositif de mesure de coordonnées selon l'une des revendications 1 à 8, dans lequel la table de mesure (3) est réalisée comme table tournante.

12. Dispositif de mesure de coordonnées selon l'une des revendications 4 à 11, dans lequel le bras d'étrier (16) est monté aussi de manière à pouvoir tourner par rapport au deuxième chariot (12).

13. Dispositif de mesure de coordonnées selon l'une des revendications 1 à 12, dans lequel le bras d'étrier (16) comprend un bras en porte-à-faux (20) s'étendant sensiblement parallèlement au plan de bridage principal (9) de la table de mesure (3), et un bras (21) se raccordant au premier, s'étendant sensiblement perpendiculairement à celui-ci et portant à son extrémité (22) le dispositif de palpage (5).

14. Dispositif de mesure de coordonnées selon l'une des revendications 1 à 13, dans lequel le dispositif de palpage (5) est réalisé comme module échangeable qui, en tant qu'unité rapportée, peut être accouplé à une interface du bras d'étrier (16), réalisée pour l'accouplement de différents dispositifs de palpage, et désaccouplé de celle-ci.
